# EUROPÄISCHE PATENTSCHRIFT

(11) **EP 3 315 844 B1**
(45) Veröffentlichungstag und Bekanntmachung des Hinweises auf die Patenterteilung: **03.07.2019**
(21) Anmeldenummer: 16020424.4
(22) Anmeldetag: 28.10.2016
(51) Int. Cl.: F16L 55/132, B65D 39/12

(54) **VERWENDUNG EINER PRESSDICHTUNG MIT ELASTOMERKÖRPER UND SPANNBOLZEN**
USE OF A COMPRESSIBLE SEAL WITH ELASTOMERIC BODY AND A LOCKING PIN
UTILISATION D'UN JOINT DE COMPRESSION DOTÉ D'UN CORPS ÉLASTOMÈRE ET BOULON DE SERRAGE

(43) Veröffentlichungstag der Anmeldung: 02.05.2018
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB

(56) Entgegenhaltungen:
- FR-A- 1 064 565
- GB-A- 1 434 720
- US-A- 2 993 616

## Beschreibung

Die vorliegende Erfindung betrifft eine Pressdichtung mit Elastomerkörper und Spannbolzen zum Einsetzen in eine Öffnung und Abdichten derselben.

Aus dem Stand der Technik sind Pressdichtungen mit einem Elastomerkörper und einem Gewindebolzen zum Spannen, also Verformen des Elastomerkörpers bekannt. Bildlich gesprochen kann der Elastomerkörper dabei bspw. wie in einem Schraubstock in einer Richtung zusammengedrückt werden, um sich in den Richtungen senkrecht dazu dichtend anzulegen, z. B. an die Laibung einer Wandöffnung. Die hierfür notwendige Spannkraft wird dabei durch Drehen des Gewindebolzens aufgebracht, dessen Bolzenkopf ist üblicherweise mit einem Außen- oder Innen-Mehrkant als Schraubenkopfantrieb versehen.

Aus der FR 1 064 565 A ist ein Flaschenverschluss zum Einsetzen in eine Flasche bekannt. Durch Verschieben eines Keilelements kann ein Dichtelement des Verschlusses verspannt und die Flasche verschlossen werden.

Aus der GB 1 434 720 A ist ein Molch bekannt, nämlich ein Reinigungs- bzw. Inspektions- oder Wartungsgerät für Pipelines. Der Molch kann in die Pipeline gesetzt und mit einer radial eingebrachten Betätigungseinrichtung so verspannt werden, dass er diese (zeitweilig) verschließt.

Der vorliegenden Erfindung liegt die Aufgabe zugrunde, eine besonders vorteilhafte Verwendung einer Pressdichtung mit Elastomerkörper und Spannbolzen anzugeben.

Erfindungsgemäß löst diese Aufgabe eine Verwendung nach Anspruch 1, mit einer Pressdichtung, die zum Anziehen des Spannbolzens ein Spannelement aufweist. Dieses hat zueinander schräg angestellte Schrägflächen und wird bzw. ist so am Spannbolzen angeordnet, dass es sich an diesem abstützt. Durch Verschieben des Spannelements kann der gewissermaßen an einer der Schrägflächen geführte Spannbolzen ein Stück weit versetzt, also angezogen, und der Elastomerkörper damit verformt werden. Der Spannbolzen wird dabei nicht durch eine in einem Gewinde geführte Drehbewegung angezogen, sondern durch eine mit dem Verschieben des Spannelements über dessen Schrägflächen aufgebrachte Kraft. Das Spannelement stützt sich dazu gegenüber dem Spannbolzen und dem Elastomerkörper ab, also mit einer seiner Schrägflächen an einer dem Spannbolzen zugeordneten Anlagefläche und mit der anderen Schrägfläche an einer dem Elastomerkörper zugeordneten Anlagefläche.

Wie nachstehend im Detail erläutert, ist das Spannelement erfindungsgemäß ein Keilelement und sind die Schrägflächen Keilaußenflächen davon. Dieses Keilelement wird dann durch Verschieben in seiner Verjüngungsrichtung in die Spannposition gebracht, wobei es die Anlageflächen voneinander wegdrückt (und den Spannbolzen so unter Zug setzt).

Die zum Verschieben des Spannelements in den Spannzustand notwendige Kraft kann bspw. mit einem Schlagwerkzeug, etwa einem Hammer, aufgebracht werden. Dies kann gegenüber dem Einschrauben eines Gewindebolzens bspw. schon die Montagezeit betreffend Vorteile bieten. Zudem ist auf der Baustelle, insbesondere in der Rohbauphase, ein Hammer ein gängiges Werkzeug, muss also bspw. nicht ein gesondert zu dem Schraubenkopfantrieb eines Gewindebolzens passender Schraubenschlüssel vorgehalten werden. Gleichzeitig lassen sich hohe Spannkräfte erzeugen und so auch massive Elastomerkörper verformen.

Die erfindungsgemäße Pressdichtung kann insbesondere als Blindverschluss genutzt werden, mit dem für sich eine Öffnung in einem Wand- oder Bodenelement, insbesondere einem Betonbauteil, zeitweilig oder auch dauerhaft verschlossen werden kann. Durch die fragliche Öffnung kann dann ggf. erst später eine Leitung hindurchgeführt werden. Dazu wird der Blindverschluss entnommen und nach dem Hindurchführen der Leitung entweder durch eine andere Pressdichtung mit Durchgangsöffnung für die Leitung oder nach einer entsprechenden Anpassung (Herausnehmen eines Blindstopfens aus dem Elastomerkörper) ihrerseits erneut selbst eingesetzt.

Ein besonders vorteilhaftes Anwendungsgebiet kann sich bei sogenannten Flutöffnungen ergeben, die insbesondere bei größeren Gebäuden während bzw. auch noch nach dem Aufbau des Kellers notwendig sein können, um bei einem stark ansteigenden Grundwasserspiegel ein Aufschwimmen der Kellerwanne zu verhindern (während der Bauphase kann die Eigenmasse des Gebäudes hierfür noch zu gering sein). In einer solchen Situation ist es besser, die Kellerwanne durch bspw. in der Keller-Bodenplatte angeordnete Flutöffnungen mit dem ansteigenden Grundwasser zu fluten, als ein Aufschwemmen und damit eine dauerhafte Beschädigung des Baukörpers zu riskieren. Andererseits muss der Keller aber nicht jedes Mal geflutet werden, wenn der Grundwasserspiegel bereits auch nur ein wenig über dem Niveau der Bodenplatte liegt (dies kann für die Bausubstanz nachteilig sein).

Deshalb ist es von Vorteil, eine Flutöffnung mit einer Pressdichtung als Blindverschluss zu verschließen (was auch einem Verschmutzungseintrag vorbeugen helfen kann). Hierbei kann sich vorliegend ein besonderer Vorteil ergeben, weil das Spannelement nicht nur einfach und schnell in den Spannzustand, sondern entsprechend auch wieder in den unverspannten Zustand gebracht werden kann. Dazu ist im Zweifelsfall noch nicht einmal ein Hammer notwendig, es kann auch ein Stein oder dgl. als Schlagwerkzeug genutzt werden. Etwa bei einem Starkregenereignis kann es innerhalb kürzester Zeit zu einem sprunghaften Anstieg des Grundwasserspiegels kommen, was ein sehr schnelles Öffnen der Flutöffnungen erfordern kann - solche Situationen können bei Flutöffnungen im Allgemeinen eine Rolle spielen, nicht nur im konkreten Beispiel. Die schnelle und einfache Demontage bzw. auch Montage einer erfindungsgemäßen Pressdichtung kann bei einer Flutöffnung also von besonderem Vorteil sein, es muss dann nämlich in einer Notsituation nicht noch nach einem passenden Schraubenschlüssel gesucht bzw. durch zeitaufwendiges Drehen ein Gewindebolzen gelöst bzw. angezogen werden (auch das Verschließen von Flutöffnungen kann zeitkritisch sein).

Ferner kann die Demontage der Pressdichtung mit Spannelement gegenüber dem Lösen eines Gewindebolzens auch dann vorteilhaft sein, wenn an der Pressdichtung bereits Wasser mit bestimmten Druck ansteht. Der Monteur kann sich mit dem Schlagwerkzeug nämlich auch deutlich neben der Öffnung platzieren, also einen größeren Sicherheitsabstand einhalten kann - eine unter Druck aus der Öffnung herausgedrückte Pressdichtung stellt schon an sich eine Gefahrenquelle dar, das Hantieren daran mit einem Schraubenschlüssel verschärft diese Situation.

Auch unabhängig von diesen Anwendungsmöglichkeiten im Einzelnen können das Spannelement und die übrige Pressdichtung bis zur Montage in der Öffnung als gesonderte Teile gehandhabt werden; ggf. kann sogar je nach Anwendungsgebiet bzw. aufzubringender Spannkraft ein vom Winkel zwischen den Schrägflächen (beeinflusst "Übersetzungsverhältnis") her passendes Spannelement ausgewählt wird. Dahingehend ist das "anordenbar" zu lesen, dass also das Spannelement auch erst im Zuge der Montage am Spannbolzen angeordnet werden kann. Bevorzugt ist das Spannelement am Spannbolzen angeordnet und es kann bspw. auch im unverspannten Zustand die übrige Pressdichtung beisammenhalten.

Die "Spannbolzen-Längsachse" kann bspw. eine Achse einer Dreh- bzw. Rotationssymmetrie des Spannbolzens sein, jedenfalls von einem etwaigen Gewinde und/oder einer nachstehend beschriebenen Aussparung abgesehen. Im Allgemeinen kann der Spannbolzen bspw. an jenem Ende, das dem Ende mit dem Spannelement daran entgegengesetzt liegt, mit einem Gewinde versehen und damit bspw. an einem Presskörper befestigt sein (einem "zweiten" Presskörper in der nachstehenden Terminologie). Bevorzugt ist der Spannbolzen jedoch gewindelos. Entlang der "Spannbolzen-Längsachse" hat er bevorzugt eine um mindestens das 5- bzw. 10-fache größere Erstreckung als in jede der Richtungen senkrecht dazu (Obergrenzen können bspw. bei dem 100- bzw. 50- oder 30-fachen liegen).

Entlang der Verjüngungsrichtung des Spannelements laufen dessen Schrägflächen aufeinander zu, sie müssen sich aber nicht zwingend treffen. Es muss also bspw. ein Keilelement an seinem Schmalende nicht zwingend spitz zulaufen; im Gegenteil kann bspw. mit Blick auf eine Demontage mit einem Schlagwerkzeug auch ein stumpfes Schmalende bevorzugt sein. Von zwei Schrägebenen ausgehend, in denen jeweils eine andere der beiden Schrägflächen liegt, ergibt sich die Verjüngungsrichtung als zu einer Linie, in welcher sich die beiden Schrägebenen schneiden, senkrecht und dabei parallel zu einer Mittenebene, welche den von den beiden Schrägflächen miteinander eingeschlossenen Winkel mittig in zwei gleichgroße Hälften teilt.

Die Orientierung der Verjüngungsrichtung "gewinkelt" zu der Spannbolzen-Längsachse meint ganz allgemein eine nicht parallele Orientierung. Bevorzugt ist die Verjüngungsrichtung gegenüber der Spannbolzen-Längsachse um in der Reihenfolge der Nennung zunehmend bevorzugt mindestens 45°, 60° bzw. 75° verkippt, wobei eine mögliche Obergrenze davon unabhängig bspw. bei höchstens 85° liegen kann (betrachtet wird der kleinere von zwei miteinander eingeschlossenen Winkeln). Das Verschieben "in" der Verjüngungsrichtung (im Falle des Keilelements) meint, dass eine Verschieberichtung jedenfalls eine zu der Verjüngungsrichtung parallele Komponente hat, vorzugsweise hat die parallele Richtungskomponente den größeren Anteil (> 50%) an der entsprechenden Richtung.

Das dichtende Anpressen bzw. "Anpressbarsein" des Elastomerkörpers kann im Allgemeinen bspw. auch ein Anpressen an einen bzw. mehrere andere Elastomerkörper betreffen. Bevorzugt wird der Elastomerkörper an eine die Öffnung begrenzende Laibung angepresst, wobei diese Laibung entweder von dem Wand- oder Bodenelement selbst gebildet sein kann, bspw. im Falle einer Kernbohrung. Es kann aber bspw. auch ein in dem Wand- oder Bodenelement vergossenes Futterrohr bzw. ein an oder in dem Wand- oder Bodenelement verbauter Rahmen die Laibung bilden, also die Öffnung begrenzen. Bevorzugt ist die Öffnung eine sich von der einen Seite des Wand- oder Bodenelements zur entgegengesetzten Seite erstreckende Durchgangsöffnung.

Weitere bevorzugte Ausführungsformen finden sich in den abhängigen Ansprüchen und auch der übrigen Beschreibung, wobei in der Darstellung der Merkmale nicht immer im Einzelnen zwischen Vorrichtungs-, Verfahrens- und Verwendungsaspekten unterschieden wird; jedenfalls implizit ist die Offenbarung hinsichtlich sämtlicher Anspruchskategorien zu lesen. Sofern also bspw. eine bestimmte Anwendung bzw. Montagedetails der Pressdichtung beschrieben werden, ist dies sowohl hinsichtlich einer entsprechenden Verwendung als auch auf eine für eine entsprechende Verwendung ausgelegte Pressdichtung zu lesen.

Wie bereits erwähnt, ist das Spannelement erfindungsgemäß ein Keilelement und sind die Schrägflächen Keilaußenflächen. Diese liegen einander in Bezug auf eine zur Verjüngungsrichtung senkrechte Richtung entgegengesetzt. Mit seiner dem Elastomerkörper abgewandten Keilaußenfläche liegt das Keilelement dann an einer dem Spannbolzen zugeordneten Anlagefläche an, die bevorzugt an dem Spannbolzen selbst, aber im Allgemeinen auch an einem damit fest verbundenen Teil ausgebildet sein kann (unabhängig davon im Einzelnen ist diese Anlagefläche dem Elastomerkörper zugewandt). Mit seiner dem Elastomerkörper zugewandten Keilaußenfläche liegt das Keilelement an einer anderen, nämlich dem Elastomerkörper zugeordneten Anlagefläche an, die im Allgemeinen auch am Elastomerkörper selbst ausgebildet sein kann, bevorzugt jedoch an einem auf diesen Spannkraft übertragenden Teil ausgebildet ist, insbesondere einem Presskörper. Unabhängig davon im Einzelnen ist der Spannbolzen durch ein Verschieben des Keilelements mit einer bevorzugt geradlinigen Bewegung in der Verjüngungsrichtung spannbar.

Soweit auf eine Orientierung einer jeweiligen Fläche dem Elastomerkörper "zugewandt" oder "abgewandt" Bezug genommen wird, meint dies, dass eine von der entsprechenden Fläche wegweisende Flächennormale eine Richtungskomponente hat, bevorzugt eine überwiegende Richtungskomponente, die zur Spannbolzen-Längsachse parallel liegt und zum Elastomerkörper hinweist ("zugewandt") bzw. von diesem wegweist ("abgewandt"). Es muss also bspw. eine dem Elastomerkörper zugewandte Fläche diesem nicht zwingend gegenüberliegen, sondern kann auch seitlich (senkrecht zur Spannbolzen-Längsachse) dazu versetzt sein, insbesondere im Falle einer gesonderten, seitlich neben dem Elastomerkörper angeordneten Spanneinrichtung (siehe unten im Detail).

Bei einer bevorzugten Ausführungsform ist die dem Spannbolzen zugeordnete Anlagefläche am Spannbolzen selbst ausgebildet, durchsetzt diesen nämlich eine Aussparung, in welcher das Keilelement angeordnet ist. Die Anlagefläche, an welcher sich das Keilelement abstützt, begrenzt diese Aussparungen in Bezug auf eine zur Spannbolzen-Längsachse parallele, vom Elastomerkörper wegweisende Richtung (die Aussparung durchsetzt den Spannbolzen zu dessen dem Elastomerkörper abgewandten Ende beabstandet). In einer zur Spannbolzen-Längsachse senkrechten Richtung erstreckt sich die Aussparung durch den Spannbolzen hindurch, sodass das Keilelement gut verschiebbar darin geführt ist. Das Keilelement stützt sich mit seiner dem Elastomerkörper abgewandten Keilaußenfläche an besagter, die Aussparung begrenzende Anlagefläche ab.

In bevorzugter Ausgestaltung ist die Aussparung ein den Spannbolzen durchsetzendes Durchgangsloch. Das Durchgangsloch wird dann also in sämtlichen, zu einer Durchsetzungsrichtung, in welcher sich das Durchgangsloch durch den Spannbolzen hindurch erstreckt, senkrechten Richtungen von Spannbolzenmaterial eingefasst. Bezogen auf einem Umlauf um die Durchsetzungsrichtung wird das Durchgangsloch vollständig umlaufend von Spannbolzenmaterial eingefasst. Die Kombination aus Spannbolzen mit Durchgangsloch und Keilelement ist mechanisch sehr robust und es kann eine entsprechend große Spannkraft aufgebracht werden.

Bei einer bevorzugten Ausführungsform ist der Spannbolzen ein Flachkörper, bevorzugt ist er aus einem Flächenmaterial herausgearbeitet. Ein solches Flächenmaterial kann bspw. ein Blech sein, bevorzugt ein Stahlblech. Der Spannbolzen kann aus dem Flächenmaterial herausgeschnitten sein, bspw. mit einem Laserstrahl, bzw. auch ausgestanzt sein. Es kann sich bei dem Spannbolzen also bspw. um ein Laserschneid- oder Stanzteil handeln. In seiner zu den Flächenrichtungen senkrechten Dickenrichtung hat das Flächenmaterial bspw. eine Dicke von mindestens 1 mm, 2 mm, 3 mm bzw. 4 mm, wobei mögliche Obergrenzen (davon unabhängig) bspw. bei höchstens 15 mm, 10 mm, 8 mm bzw. 6 mm liegen können (jeweils in der Reihenfolge der Nennung zunehmend bevorzugt).

Bevorzugt ist bzw. sind auch der bzw. die Presskörper (siehe unten im Detail) Flachkörper, der/die aus einem Flächenmaterial herausgearbeitet ist/sind. Weiter bevorzugt hat das Flächenmaterial des/der Presskörper dieselbe Dicke wie das Flächenmaterial des Spannbolzens. Dies kann in der Fertigung Vorteile bieten, weil der/die Presskörper und der Spannbolzen dann im selben Arbeitsschritt aus demselben Flächenmaterial herausgearbeitet werden können, was den logistischen Aufwand reduzieren hilft. Bevorzugt kann auch das Spannelement aus einem Flächenmaterial herausgearbeitet sein, welches dieselbe Dicke wie das Flächenmaterial des Spannbolzens und weiter bevorzugt wie auch jenes des/der Presskörper(s) hat. Generell kann ein Vorteil des aus einem Flächenmaterial herausgearbeiteten Spannbolzens bspw. darin liegen, dass sich dessen Abmessungen beim Design der Pressdichtung vergleichsweise leicht verändern und so an die bei der konkreten Pressdichtung gegebenen Anforderungen (aufzubringende Spannkraft) anpassen lassen.

Bei einer bevorzugten Ausführungsform, die das Keilelement betrifft, schließen die Schrägflächen des Spannelements miteinander einen Keilwinkel von in der Reihenfolge der Nennung zunehmend bevorzugt mindestens 2°, 4°, 6°, 8°, 10°, 12°, 14°, 16°, 18° bzw. 20° ein. Mögliche Obergrenzen können bspw. bei in der Reihenfolge der Nennung zunehmend bevorzugt höchstens 45°, 42°, 40°, 38°, 36°, 34°, 32° bzw. 30° liegen, wobei eine Obergrenze im Allgemeinen auch unabhängig vom Vorsehen einer Untergrenze von Interesse sein kann (und offenbart sein soll), und umgekehrt. In den genannten Bereichen ergibt sich ein guter Kompromiss aus Kraftübertragung beim Spannen und einer nicht allzu großen Verschiebestrecke des Spannelements in den Spannzustand. Letzteres kann generell ein Vorteil des vorliegenden Spannkonzepts sein, dass sich nämlich eine senkrecht zur Spannbolzen-Längsachse vergleichsweise kompakte Pressdichtung realisieren lässt, etwa im Vergleich zu einer Pressdichtung mit Schraubbolzen, jedenfalls unter Berücksichtigung des an diesen angesetzten Schraubenschlüssels; dies kann bspw. bei einer Montage in einem schlecht zugänglichen Bereich, etwa einer Ecke, von Vorteil sein, in welcher der Schraubenschlüssel nicht umlaufend gedreht und entsprechend wiederholt angesetzt und abgenommen werden müsste.

Bei einer bevorzugten Ausführungsform erstreckt sich der Spannbolzen in den Elastomerkörper hinein, vorzugsweise durchsetzt er diesen (von der Stirnseite mit dem Spannelement daran zur entgegengesetzten Stirnseite). Die Pressdichtung ist dann derart ausgelegt, dass der Elastomerkörper mit dem Anziehen des Spannbolzens in Richtung der Spannbolzen-Längsachse gestaucht wird, und sich infolgedessen in den Richtungen senkrecht dazu dichtend anlegt. Dabei sind der Teil des Elastomerkörpers, der dichtend angepresst wird, und jener Teil, der axial gestaucht wird, bevorzugt einstückig miteinander (nicht zerstörungsfrei voneinander trennbar), besonders bevorzugt monolithisch miteinander (aus demselben zusammenhängenden Material gebildet). Der axial gestauchte Elastomerkörper legt sich bevorzugt auch an den Spannbolzen selbst an, was im Falle des Flachkörper-Spannbolzens (siehe vorne) bspw. mit einem an dessen Form angepassten Durchgangsloch im Elastomerkörper oder auch mit einer hinreichend großen Verformung des Elastomerkörpers im Falle eines kreisrunden Durchgangslochs erreicht werden kann.

Im Allgemeinen kann der Spannbolzen indes auch einer gesondert zu dem Elastomerkörper vorgesehenen Spanneinrichtung zugeordnet sein; eine entsprechende Spanneinrichtung wird dann gemeinsam mit dem Elastomerkörper (und ggf. weiteren Elastomerkörpern) in die Öffnung gesetzt und füllt diese entsprechend auch gemeinsam mit dem/den Elastomerkörper(n) auf; eine solche Spanneinrichtung überträgt die Spannkraft dann senkrecht zur Spannbolzen-Längsachse, sie wird also durch Anziehen des Spannbolzens senkrecht dazu geweitet und drückt den bzw. die Elastomerkörper entsprechend senkrecht zur Spannbolzen-Längsachse dichtend an. Bei dieser Ausgestaltung bildet bevorzugt ein an bzw. in die Wand gesetzter Rahmen, etwa aus Kunststoff oder Metall, die Laibung. Im Folgenden wird jedoch vertieft die Variante "axial gestauchter und senkrecht dazu angepresster Elastomerkörper" diskutiert.

Eine bevorzugte Ausführungsform betrifft eine Pressdichtung mit einem entsprechenden Elastomerkörper und einem Keilelement als Spannelement, welches gemeinsam mit einem ersten Presskörper an einer ersten Stirnseite des Elastomerkörpers angeordnet ist. Als "erste" Stirnseite des Elastomerkörpers wird per definitionem jene bezeichnet, an welcher das Keilelement angeordnet ist; die "zweite" Stirnseite liegt der ersten bezogen auf eine zur Spannbolzen-Längsachse parallele Richtung ("Achsrichtung") entgegengesetzt. In Achsrichtung ist der erste Presskörper relativ zum Spannbolzen frei verschiebbar. Der erste Presskörper ist bezogen auf die Achsrichtung zwischen dem Keilelement und dem Elastomerkörper angeordnet und wird an den Elastomerkörper angepresst, wenn das Keilelement in der Verjüngungsrichtung verschoben wird. Ein "Anpressen" muss generell im Rahmen dieser Offenbarung nicht zwingend eine direkte Anlage, also einen Kontakt, implizieren (es ist bspw. auch eine Zwischenschicht möglich), wenngleich eine direkte Anlage bevorzugt ist.

In bevorzugter Ausgestaltung liegt das Keilelement direkt an dem ersten Presskörper an, besonders bevorzugt hat der erste Presskörper also an seiner dem Elastomerkörper abgewandten Stirnseite eine Anlagefläche für das Keilelement und liegt er mit seiner entgegengesetzten, dem Elastomerkörper zugewandten Stirnseite direkt an diesem an.

Bei einer bevorzugten Ausführungsform ist an der zweiten Stirnseite des Elastomerkörpers ein zweiter Presskörper angeordnet, mit dem der Spannbolzen zum Stauchen des Elastomerkörpers zusammenwirkt. Im Spannzustand zieht der Spannbolzen den zweiten Presskörper in Richtung des Elastomerkörpers, der zweite Presskörper wird also angepresst (bevorzugt liegt er direkt am Elastomerkörper an). Im Allgemeinen können der Spannbolzen und der zweite Presskörper auch monolithisch miteinander ausgebildet sein, kann der zweite Presskörper also ein senkrecht zur Spannbolzen-Längsachse hervortretender Spannbolzenkopf sein. Bevorzugt ist der Spannbolzen jedoch im zweiten Presskörper befestigt, die beiden Teile können bspw. miteinander verschweißt, kraft- und/oder formschlüssig verbunden sein, bevorzugt ist eine ausschließlich formschlüssige Verbindung.

Generell ist der Presskörper, egal ob erster oder zweiter, bevorzugt als Pressplatte ausgebildet, hat er also in den Richtungen senkrecht zur Spannbolzen-Längsachse eine um mindestens das 10- bzw. 20-fache größere Erstreckung als axial. Als Material ist Metall bevorzugt, das angesichts der möglichen Montage mit einem Schlagwerkzeug mechanisch robuste Ausführungsformen ermöglicht.

Generell, also auch unabhängig von Vorhandensein bzw. Ausgestaltung des/der Presskörper(s), ist das Keilelement bevorzugt aus Metall vorgesehen, besonders bevorzugt aus Stahl. Auch materialunabhängig kann die Geometrie betreffend ein Keilelement bevorzugt sein, dessen Breitende und/oder dessen Schmalende sich senkrecht zu einer der Keilaußenflächen erstreckt, und zwar bevorzugt zu der dem Elastomerkörper zugewandten Keilaußenfläche. Dies kann insoweit vorteilhaft sein, als das Keilelement bei der Montage mit seiner dem Elastomerkörper zugewandten Keilaußenfläche im Wesentlichen senkrecht zur Spannbolzen-Längsachse orientiert sein kann, womit die Breit- und/oder Schmalseite im Wesentlichen parallel zur Spannbolzen-Längsachse liegen und ein guter Krafteintrag mit einem Schlagwerkzeug möglich ist. An seinem Breitende hat das Keilelement eine größere Erstreckung als am Schmalende.

Im Allgemeinen ist aber auch eine andere Keilelementform denkbar, bspw. ein sogenannter Doppelkeil. Unabhängig davon im Einzelnen hat das Keilelement bevorzugt eine flache Form, hat es also in einer zur Spannbolzen-Längsachse und zur Verjüngungsrichtung senkrechten Richtung eine Dicke, die kleiner ist als jeweils die kleinste Abmessung jeder der Keilaußenflächen, bevorzugt auch kleiner als die Erstreckung der Schmalseite. In absoluten Werten kann die Dicke bspw. höchstens 15 mm, 10 mm, 8 mm bzw. 6 mm betragen (in der Reihenfolge der Nennung zunehmend bevorzugt), wobei eine mögliche Untergrenze (davon unabhängig) bspw. bei mindestens 4 mm liegen kann.

Generell ist der Spannbolzen bevorzugt aus einem Metall vorgesehen, besonders bevorzugt aus Stahl. Bspw. in Verbindung mit einem Keilelement aus Metall bzw. Stahl lassen sich so besonders hohe Spannkräfte erzeugen.

Bei einer bevorzugten Ausführungsform, welche den Spannbolzen mit Aussparung für das Keilelement betrifft, erstreckt sich die Aussparung im Spannbolzen in der Achsrichtung in den Elastomerkörper hinein, jedenfalls im unverspannten Zustand. Eine Ebene, welche die dem Keilelement zugewandte Stirnseite des Elastomerkörpers beinhaltet, schneidet dann also die Aussparung. In solcher Ausgestaltung kann der Spannbolzen in Achsrichtung auch über eine verhältnismäßig große Wegstrecke bewegt werden, ist also eine entsprechend starke Verformung des Elastomerkörpers möglich.

Bei einer bevorzugten Ausführungsform ist das Spannelement unverlierbar an der übrigen Pressdichtung gehalten, vorzugsweise an dem Spannbolzen. Das Keilelement als Spannelement kann also bspw. in einer Aussparung bzw. Durchgangsöffnung des Spannbolzens sitzen und gegen ein Herausrutschen bzw. - fallen entgegen der Verjüngungsrichtung gesichert sein, bspw. mit einem das Keilelement durchsetzenden Sicherungsstift. Im Allgemeinen ist aber bspw. auch eine Sicherungskette denkbar, mit welcher das Spannelement an der übrigen Pressdichtung, insbesondere dem Spannbolzen, gehalten sein kann.

Bei einer bevorzugten Ausführungsform ist ein Arretierungsmittel vorgesehen, mit welchem das Spannelement in dem Spannzustand arretierbar ist, welches also ein Verrutschen des Spannelements entgegen der Verjüngungsrichtung (im Falle des Keilelements) blockiert bzw. zumindest erschwert. Bevorzugt ist das Spannelement dazu mit einem Loch versehen, besonders bevorzugt einer Lochreihe (mehreren Löchern in Reihe), wobei das Verrutschen aus dem Spannzustand durch Einsetzen eines Arretierungsstifts in das bzw. eines der Löcher blockiert wird (nach einem ggf. geringfügigen Verrutschen würde der Arretierungsstift am Spannbolzen anliegen und ein weiteres Verrutschen verhindern). Eine Lochreihe kann hierbei insoweit vorteilhaft sein, als verschiedene Spannzustände, in denen der Elastomerkörper unterschiedlich stark verformt ist, arretierbar sind.

Bei einer bevorzugten Ausführungsform ist der Elastomerkörper als Blindverschluss ausgebildet, nimmt er also keine durch die Öffnung hindurchgeführte Leitung auf. Im Allgemeinen kann der Elastomerkörper hierbei für ein späteres Hindurchführen einer Leitung ausgelegt, also mit einem herausnehm- bzw. -lösbaren Blindstopfen ausgestattet sein, bevorzugt ist er jedoch dauerhaft als Blindverschluss ausgelegt, also insoweit frei von Trennfugen bzw. Sollbruchstellen. Bevorzugt ist der Elastomerkörper ein von einer Durchgangsöffnung mit dem Spannbolzen darin abgesehen (bzw. von mehreren Durchgangsöffnungen im Falle mehrerer Spannbolzen abgesehen) unterbrechungsfrei zusammenhängendes Teil, was mechanisch robuste Aufbauten ermöglicht. Im Allgemeinen könnte die Pressdichtung indes aber auch zum Hindurchführen einer bzw. auch mehrerer Leitungen ausgelegt sein, würde der Elastomerkörper dann mit dem Verformen nicht nur an die Laibung, sondern auch an die hindurchgeführte(n) Leitung(en) angepresst. Unabhängig davon im Einzelnen weist die Pressdichtung bevorzugt nur einen einzigen Spannbolzen auf, der weiter bevorzugt, bezogen auf Richtungen senkrecht zur Spannbolzen-Längsachse, mittig im Elastomerkörper sitzt. Die Spannbolzen-Längsachse kann für den Elastomerkörper bevorzugt eine Achse einer Drehsymmetrie sein, besonders bevorzugt einer Rotationssymmetrie. Dies kann eine gleichmäßige Verteilung der Spannkräfte ermöglichen.

Die Erfindung betrifft die Verwendung einer vorliegend offenbarten Pressdichtung zum Einsetzen in eine Öffnung und Abdichten derselben durch Anziehen des Spannbolzens, nämlich durch Verschieben des Spannelements in der Verjüngungsrichtung. Mit dem Verschieben aus dem unverspannten in den Spannzustand wird der Massenschwerpunkt des Keilelements versetzt, bevorzugt mit einer geradlinigen Bewegungsstrecke, die gewinkelt (vgl. die vorstehenden Definitionen dazu) zur Spannbolzen-Längsachse liegt. Dies soll ausdrücklich auch hinsichtlich einer entsprechend ausgelegten Pressdichtung offenbart sein, im Übrigen wird die Verwendung betreffend auch auf die vorstehenden Ausführungen verweisen.

In bevorzugter Ausgestaltung wird die Kraft zum Verschieben des Spannelements schlagend aufgebracht, vorzugsweise mit einem Schlagwerkzeug, besonders bevorzugt mit einem Hammer.

Unabhängig davon im Einzelnen kann eine Verwendung bevorzugt sein, bei welcher eine Mehrzahl Öffnungen, die einem gemeinsamen Baukörper zugeordnet sind, mit jeweils einer vorliegend offenbarten Pressdichtung mit Keilelement gedichtet werden, bspw. mindestens 10, 20 bzw. 30 Öffnungen. Hierbei kann die vergleichsweise schnelle und einfache Montage einer jeweiligen Pressdichtung, im Prinzip jeweils durch einen Schlag, im Besonderen zum Tragen kommen. Ein Anwendungsbeispiel können sog. Kabelschächte oder Trafostationen sein. Wenngleich im Prinzip beliebig viele Öffnungen mit jeweils einer entsprechenden Pressdichtung gedichtet werden können, können Obergrenzen (der Anzahl Offnungen an einem einzigen Baukörper) bspw. bei höchstens 1000, 500 bzw. 200 Öffnungen liegen.

Im Folgenden wird die Erfindung anhand eines Ausführungsbeispiels näher erläutert, wobei auch weiterhin nicht im Einzelnen zwischen den unterschiedlichen Anspruchskategorien unterschieden wird.

Im Einzelnen zeigt
- Figur 1: eine erfindungsgemäße Pressdichtung mit einem Keilelement im unverspannten Zustand;
- Figur 2: die Pressdichtung gemäß Figur 1 mit dem Keilelement im Spannzustand.

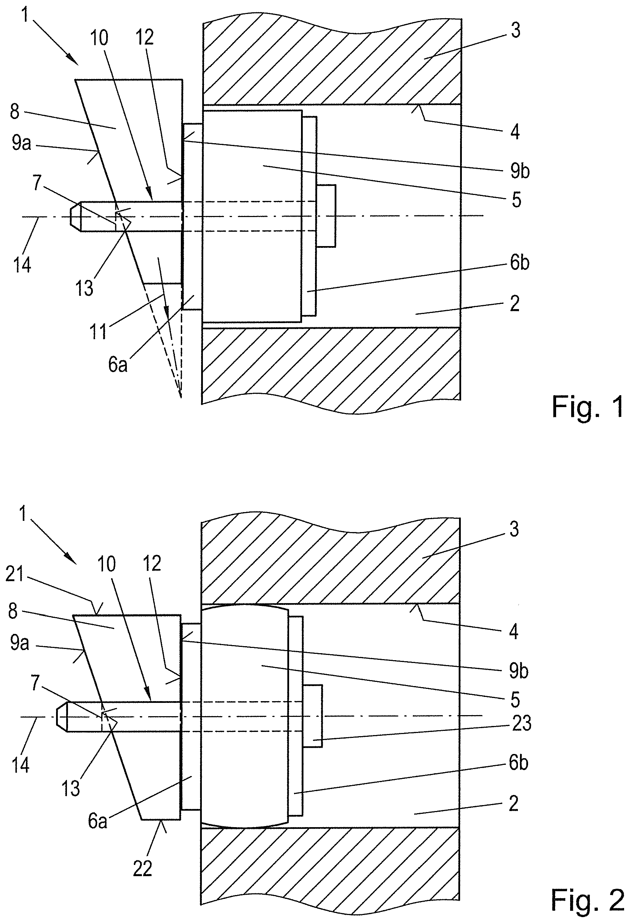

Figur 1 zeigt eine Pressdichtung 1, die in eine Öffnung 2 in einer Wand 3 eingesetzt ist, vorliegend einer Wand 3 aus Beton. Die Öffnung 2 kann als Kernbohrung eingebracht oder bereits beim Betonieren der Wand 3 freigehalten werden, jedenfalls bildet vorliegend die Wand 3 selbst eine die Öffnung 2 begrenzende Laibung 4. Die Pressdichtung 1 ist als Blindverschluss ausgelegt, dichtet dann also für sich die Öffnung 2 ab.

Die Pressdichtung 1 weist dazu einen Elastomerkörper 5 auf, der zum Zwecke des Dichtens axial gestaucht wird und sich infolgedessen senkrecht dazu dichtend an die Laibung 4 anlegt. Dazu ist an beiden Stirnseiten des Elastomerkörpers 5 jeweils ein Presskörper 6a,b in Form einer Pressplatte angeordnet, wobei die Presskörper 6a,b durch Anziehen eines Spannbolzens 7 axial aufeinander zubewegt werden können, um den Elastomerkörper 5 zwischen sich axial zu stauchen. Vorliegend ist ein über seine wesentliche Erstreckung rotationssymmetrischer Spannbolzen 7 gezeigt; ebenso kann der Spannbolzen 7 aber auch als Flachkörper ausgeführt und aus einem Flächenmaterial herausgearbeitet sein.

Erfindungsgemäß ist zum Spannen des Spannbolzens 7 ein Spannelement 8 mit zueinander schräg angestellten Schrägflächen 9a,b vorgesehen. Vorliegend ist das Spannelement 8 ein Keilelement und sind die Schrägflächen 9a,b entsprechend Keilaußenflächen. Das Keilelement ist in einer Aussparung 10, vorliegend einem Durchgangsloch, im Spannbolzen 7 angeordnet (in der Seitenansicht ist die Aussparung 10 nicht zu erkennen, sie erstreckt sich in der Figur vertikal durch den Spannbolzen 7.

Die beiden Schrägflächen 9a,b des Keilelements 8 laufen entlang der Verjüngungsrichtung 11 aufeinander zu. Das als Keilelement ausgebildete Spannelement 8 kann durch ein Verschieben in Verjüngungsrichtung 11 (mit einer überwiegenden Richtungskomponente parallel zur Verjüngungsrichtung 11) in den Spannzustand gebracht werden. Damit werden eine Anlagefläche 12 des in der Figur linken, ersten Presskörpers 6a, an welcher das Keilelement mit seiner dem Elastomerkörper 5 zugewandten Schrägfläche 9b anliegt, und eine Anlagefläche 13 des Spannbolzens 7, an welcher das Keilelement mit seiner anderen Schrägfläche 9a anliegt, axial auseinanderbewegt. Entsprechend werden die beiden Presskörper 6a,b axial, also entlang der Spannbolzen-Längsachse 14, aufeinander zubewegt und wird der Elastomerkörper 5 axial gestaucht.

Figur 2 zeigt die Pressdichtung 1 im gespannten Zustand, das Spannelement 8 ist also bereits entsprechend versetzt und der Elastomerkörper 5 axial gestaucht und infolgedessen senkrecht dazu geweitet. In diesem Spannzustand könnte das Keilelement mit einem Arretierungsstift (nicht dargestellt) gesichert werden, der durch ein in der Figur 2 knapp unterhalb des Spannbolzens 7 angeordnetes Loch gesteckt werden könnte. Bei dem vorliegend dargestellten Keilelement erstrecken sich eine Breitseite 21 und eine Schmalseite 22 im Wesentlichen senkrecht zu der dem Elastomerkörper 5 zugewandten Schrägfläche 9b. Um das Keilelement in den Spannzustand zu bringen, wird auf die Breitseite 21 mit einem Hammer oder anderem Schlagwerkzeug geschlagen. Um das Keilelement wieder aus dem in Figur 2 gezeigten Spannzustand in einen unverspannten Zustand zu bringen, wird die Kraft schlagend auf die Schmalseite 22 aufgebracht.

Der Spannbolzen 7 und auch das Keilelement sind aus Stahl vorgesehen. Die damit aufgebrachte Kraft wird über die ebenfalls aus Metall gefassten Presskörper 6a,b auf den Elastomerkörper 5 übertragen. Der Spannbolzen 6 hat an seinem, dem zweiten Presskörper 6b zugeordneten Ende einen verbreiterten Spannbolzenkopf 23, mit welchem er den zweiten Presskörper 6b axial mitnimmt. Der erste Presskörper 6a wird vom Spannbolzen 7 durchsetzt und ist an diesem axial verschiebbar geführt.

## Patentansprüche

1. Verwendung einer Pressdichtung (1), mit
einem Elastomerkörper (5) und
einem Spannbolzen (7),
wobei der Elastomerkörper (5) durch Anziehen des Spannbolzens (7) verformbar und so in Richtungen senkrecht zu einer Längsachse (14) des Spannbolzens (7) dichtend anpressbar ist,
wobei die Pressdichtung (1) ein Spannelement (8) mit zueinander schräg angestellten Schrägflächen (9a,b) aufweist, das derart an dem Spannbolzen (7) angeordnet oder anordenbar ist, dass eine Verjüngungsrichtung (11) des Spannelements (8), entlang welcher die Schrägflächen (9a,b) aufeinander zu laufen, gewinkelt zu der Spannbolzen-Längsachse (14) liegt,
wobei das Spannelement (8) ein Keilelement ist und die Schrägflächen (9a,b) Keilaußenflächen des Keilelements sind,
und wobei sich das Spannelement (8) derart gegenüber dem Spannbolzen (7) und dem Elastomerkörper (5) abstützt, dass es durch ein Verschieben in der Verjüngungsrichtung (11) in einen Spannzustand bringbar und damit der Spannbolzen (7) anziehbar und der Elastomerkörper (5) verformbar ist,
bei welcher Verwendung die Pressdichtung (1) in eine Öffnung (2) in einem Wand- oder Bodenelement (3) eingesetzt und damit die Öffnung (2) abgedichtet wird.

2. Verwendung nach Anspruch 1, bei welcher den Spannbolzen (7) eine Aussparung (10) durchsetzt, vorzugsweise ein Durchgangsloch, in welcher Aussparung (10) das Keilelement derart angeordnet oder anordenbar ist, dass es sich mit einer (9a) der zueinander schräg angestellten Keilaußenflächen (9a,b) an einer Anlagefläche (13) des Spannbolzens (7) abstützt, welche Anlagefläche (13) die Aussparung (10) in Bezug auf eine zu der Spanbolzen-Längsachse (14) parallele, von dem Elastomerkörper (5) weg weisende Richtung begrenzt.

3. Verwendung nach einem der vorstehenden Ansprüche, bei welcher der Spannbolzen (7) ein Flachkörper ist, vorzugsweise aus einem Flächenmaterial herausgearbeitet ist.

4. Verwendung nach einem der vorstehenden Ansprüche, bei welcher die zueinander schräg angestellten Schrägflächen (9a,b) des Spannelements (8) miteinander einen Winkel von mindestens 2° und von höchstens 45° einschließen.

5. Verwendung nach einem der vorstehenden Ansprüche, bei welcher sich der Spannbolzen (7) in den Elastomerkörper (5) hinein erstreckt, diesen vorzugsweise durchsetzt, womit die Pressdichtung (1) derart ausgelegt ist, dass beim Anziehen des Spannbolzens (7) der Elastomerkörper (5) in Richtung der Spannbolzen-Längsachse (14) gestaucht und infolgedessen in den Richtungen senkrecht dazu dichtend angepresst wird.

6. Verwendung nach Anspruch 5 in Verbindung mit einem der Ansprüche 1 bis 4, bei welcher das Keilelement gemeinsam mit einem ersten Presskörper (6a) der Pressdichtung (1) an einer ersten Stirnseite des Elastomerkörpers (5) angeordnet ist, wobei der erste Presskörper (6a) bezogen auf eine zur Spannbolzen-Längsachse (14) parallele Richtung zwischen dem Keilelement und dem Elastomerkörper (5) angeordnet ist und beim Verschieben des Keilelements in der Verjüngungsrichtung (11) von diesem an den Elastomerkörper (5) angepresst wird.

7. Verwendung nach Anspruch 6, bei welcher das Keilelement mit seiner dem Elastomerkörper (5) zugewandten (9b) der zueinander schräg angestellten Keilaußenflächen (9a,b) direkt an einer Anlagefläche (12) des ersten Presskörpers (1) anliegt.

8. Verwendung nach einem der Ansprüche 5 bis 7, bei welcher an einer zweiten Stirnseite des Elastomerkörpers (5), die einer ersten Stirnseite des Elastomerkörpers (5) mit dem Keilelement daran entgegengesetzt liegt, ein zweiter Presskörper (6b) angeordnet ist, mit dem der Spannbolzen (7) zum Stauchen des Elastomerkörpers (5) zusammenwirkt ist.

9. Verwendung nach einem der Ansprüche 5 bis 8 in Verbindung mit Anspruch 2 oder 3, bei welcher sich die Aussparung (10) in dem Spannbolzen (7) in einer zur Spannbolzen-Längsachse (14) parallelen Richtung in den Elastomerkörper (5) hinein erstreckt, jedenfalls in einem unverspannten Zustand des Spannbolzens (7).

10. Verwendung nach einem der vorstehenden Ansprüche, bei welcher das Spannelement (8) unverlierbar an der übrigen Pressdichtung (1) gehalten ist, vorzugsweise an dem Spannbolzen (7).

11. Verwendung nach einem der vorstehenden Ansprüche mit einem Arretierungsmittel, mit welchem das Spannelement (8) in dem Spannzustand arretierbar ist, vorzugsweise mit einem Arretierungsstift in Verbindung mit einem Loch in dem Spannelement (8), wobei ein Verrutschen des Spannelements (8) durch Einsetzen des Arretierungsstifts in das Loch blockierbar ist.

12. Verwendung nach einem der vorstehenden Ansprüche, bei welcher der Elastomerkörper (5) als Blindverschluss ausgebildet ist.

13. Verwendung nach einem der vorstehenden Ansprüche, bei welcher die Öffnung (2) durch Anziehen des Spannbolzens (7) durch Verschieben des an dem Spannbolzen (7) angeordneten Spannelements (8) in der Verjüngungsrichtung (11) mit der Pressdichtung (1) abgedichtet wird.

14. Verwendung nach Anspruch 13, bei welcher das Spannelement (8) mit einer schlagend aufgebrachten Kraft in den Spannzustand verschoben wird, vorzugsweise mit einem Schlagwerkzeug.

## Claims

1. A use of a press seal (1), having
an elastomer body (5) and
a tensioning bolt (7),
wherein the elastomer body (5) is deformable by tightening the tensioning bolt (7) such that the elastomer body (5) can be pressed into a sealing contact in directions perpendicular to a longitudinal axis (14) of the tensioning bolt (7),
wherein the press seal (1) comprises a tensioning element (8) with inclined faces (9a, b) which are inclined towards one another, the tensioning element (8) being arranged or arrangeable at the tensioning bolt (7) such that a tapering direction (11) of the tensioning element (8), along which the inclined faces (9a, b) converge, forms an angle with the tensioning bolt longitudinal axis (14),
wherein the tensioning element (8) is a wedge element, the inclined faces (9a, b) being outer wedge faces of the wedge element, wherein the tensioning element (8) rests against the tensioning bolt (7) and the elastomer body (5) such that the tensioning element (8) can be brought into a tensioned state by displacing it in the tapering direction (11), whereby the tensioning bolt (7) can be tightened and the elastomer body (5) can be deformed,
in which use the press seal (1) is inserted into an opening (2) in a wall or floor element (3) and seals the opening (2).

2. The use according to claim 1, wherein a recess (10) intersects the tensioning bolt (7), preferably a trough-hole, the wedge element being arranged or arrangeable in the recess (10) such that the wedge element rests against a bearing surface (13) of the tensioning bolt (7) with one (9a) of its outer wedge faces (9a, b), which are inclined towards one another, the bearing surface (13) defining the recess (10) with respect to a direction, which lies parallel to the tensioning bolt longitudinal axis (14) and points away from the elastomer body (5).

3. The use according to one of the preceding claims, wherein the tensioning bolt (7) is a flat body, which is preferably worked out of a flat material.

4. The use according to one of the preceding claims, wherein the inclined faces (9a, b) of the tensioning element (8), which are inclined towards one another, form an angle with each other of at least 2° and not more than 45°.

5. The use according to one of the preceding claims, wherein the tensioning bolt (7) extends into the elastomer body (5), preferably intersecting the latter, the press seal (1) being adapted such that the elastomer body (5) is compressed in the direction of the tensioning bolt longitudinal axis (14) and, consequently, brought into the sealing contact in the directions perpendicular thereto when the tensioning bolt (7) is tightened.

6. The use according to claim 5 in combination with one claims 2 to 4, wherein the wedge element is arranged at a first front face of the elastomer body (5) together with a first press body (6a) of the press seal (1), wherein the first press body (6a) is arranged between the wedge element and the elastomer body (5) with respect to a direction parallel to the tensioning bolt longitudinal axis (14), the first press body (6a) being pressed against the elastomer body (5) by the wedge element when the latter is displaced in the tapering direction (11).

7. The use according to claim 6, wherein the wedge element directly contacts, with that one of its outer wedge faces inclined towards one another, which faces the elastomer body (5), a contact surface (12) of the first press body (1).

8. The use according to one of the claims 5 to 7, wherein a second press body (6b) is arranged at a second front face of the elastomer body (5), which lies opposite to a first front face of the elastomer body (5) at which the wedge element is arranged, the tensioning bolt (7) interacting with the second press body (6b) for compressing the elastomer body (5).

9. The use according to one of the claims 5 to 8 in combination with claim 2 or 3, wherein the recess (10) in the tensioning bolt (7) extends into the elastomer body (5) in a direction parallel to the tensioning bolt longitudinal axis (14), at least in an untightened state of the tensioning bolt (7).

10. The use according to one of the preceding claims, wherein the tensioning element (8) is held captive at the remaining press seal (1), preferably at the tensioning bolt (7).

11. The use according to one of the preceding claims, having a locking member, the tensioning element (8) being lockable in the tensioned state by the locking member, preferably by a locking pin in combination with a hole in the tensioning element (8), wherein a displaceability of the tensioning element (8) is lockable by inserting the locking pin into the hole.

12. The use according to one of the preceding claims, wherein the elastomer body (5) is adapted as a blind closure.

13. The use according to one of the preceding claims, wherein the opening (2) is sealed with the press seal (1) by tightening the tensioning bolt (7) by displacing the tensioning element (8) arranged at the tensioning bolt (7) in the tapering direction (11).

14. The use according to claim 13, wherein the tensioning element (8) is displaced into the tensioned state by a force applied by striking, preferably by a striking tool.

## Revendications

1. Utilisation d'un joint de compression (1) comportant:
un corps en élastomère (5) et
un boulon de serrage (7);
ledit corps en élastomère (5) étant déformable sous l'effet du serrage du boulon de serrage (7) et étant ainsi compressible, de façon étanche, dans des directions perpendiculaires à un axe longitudinal (14) du boulon de serrage (7),
ledit joint de compression (1) présentant un élément de serrage (8) comportant des surfaces inclinées (9a,b) présentant une inclinaison l'une par rapport à l'autre, lequel élément de serrage est installé ou
installable sur le boulon de serrage (7) de telle manière qu'une direction d'amenuisement (11) de l'élément de serrage (8), selon laquelle les surfaces inclinées (9a,b) concourent, forme un certain angle par rapport à l'axe longitudinal (14) du boulon de serrage,
ledit élément de serrage (8) consistant en un élément formant coin et
les surfaces inclinées (9a,b) sont des surfaces extérieures de l'élément formant coin,
et ledit élément de serrage (8) s'appuyant contre le boulon de serrage (7) et le corps en élastomère (5) de manière à pouvoir passer à un état de serrage sous l'effet d'un déplacement dans la direction d'amenuisement (11), en pouvant ainsi serrer le boulon de serrage (7) et déformer le corps en élastomère (5),
ledit joint de compression (1), dans le cadre de ladite utilisation, étant introduit dans une ouverture (2) pratiquée dans un élément de cloison ou de sol (3) et permettant ainsi d'étancher ladite ouverture (2).

2. Utilisation selon la revendication 1, dans laquelle un évidement (10), de préférence un trou traversant, pénètre dans le boulon de serrage (7), l'élément formant coin étant installé ou installable dans ledit évidement (10) de manière à buter contre une surface d'appui (13) du boulon de serrage (7) par l'une (9a) de ses surfaces extérieures (9a,b) inclinées, laquelle surface d'appui (13) délimite l'évidement (10) eu égard à une direction parallèle à l'axe longitudinal (14) du boulon de serrage et détournée du corps en élastomère (5).

3. Utilisation selon l'une des revendications précédentes, dans laquelle le boulon de serrage (7) est un corps plat élaboré de préférence à partir d'un matériau plat.

4. Utilisation selon l'une des revendications précédentes, dans laquelle les surfaces inclinées (9a,b) de l'élément de serrage (8) présentant une inclinaison l'une par rapport à l'autre forment un angle d'au moins 2° et d'au plus 45°.

5. Utilisation selon l'une des revendications précédentes, dans laquelle le boulon de serrage (7) s'étend dans le corps en élastomère (5), de préférence en le traversant, moyennant quoi le joint de compression (1) est conçu de manière que, lors du serrage du boulon de serrage (7), le corps en élastomère (5) soit comprimé dans la direction de l'axe longitudinal (14) du boulon de serrage et soit compressé en conséquence dans les directions perpendiculaires à celui-ci de façon étanche.

6. Utilisation selon la revendication 5 en conjonction avec l'une des revendications 1 à 4, dans laquelle l'élément formant coin est installé sur une première face du corps en élastomère (5) conjointement avec un premier corps de compression (6a) du joint de compression (1), ledit premier corps de compression (6a) étant installé, eu égard à une direction parallèle à l'axe longitudinal (14) du boulon de serrage, entre l'élément formant coin et le corps en élastomère (5) et étant compressé contre le corps en élastomère (5) par l'élément formant coin, sous l'effet du déplacement de ce dernier dans la direction d'amenuisement (11).

7. Utilisation selon la revendication 6, dans laquelle l'élément formant coin est directement en appui contre une surface d'appui (12) du premier corps de compression (1) par l'une (9b) de ses surfaces extérieures (9a,b) inclinées qui est tournée vers le corps en élastomère (5).

8. Utilisation selon l'une des revendications 5 à 7, dans laquelle il est installé un deuxième corps de compression (6b) sur une deuxième face du corps en élastomère (5) opposée à une première face du corps en élastomère (5) contre laquelle est présent l'élément formant coin, ledit boulon de serrage (7) coopérant avec ledit deuxième corps de compression pour comprimer le corps en élastomère (5).

9. Utilisation selon l'une des revendications 5 à 8 en conjonction avec la revendication 2 ou 3, dans laquelle l'évidement (10) du boulon de serrage (7) s'étend dans le corps en élastomère (5) dans une direction parallèle à l'axe longitudinal (14) du boulon de serrage, tout du moins dans un état non serré du boulon de serrage (7).

10. Utilisation selon l'une des revendications précédentes, dans laquelle l'élément de serrage (8) est maintenu sur le restant de joint de compression (1), de préférence sur le boulon de serrage (7), de manière imperdable.

11. Utilisation selon l'une des revendications précédentes, comportant un moyen de blocage permettant de bloquer l'élément de serrage (8) à l'état de serrage, de préférence une goupille de blocage associée à un trou pratiqué dans l'élément de serrage (8), tout dégagement dudit élément de serrage (8) pouvant être bloqué grâce à l'introduction de ladite goupille de blocage dans ledit trou.

12. Utilisation selon l'une des revendications précédentes, dans laquelle le corps en élastomère (5) est conçu à la manière d'un obturateur.

13. Utilisation selon l'une des revendications précédentes, dans laquelle l'ouverture (2) est étanchée par le joint de compression (1) grâce au serrage du boulon de serrage (7) sous l'effet du déplacement de l'élément de serrage (8), installé sur le boulon de serrage (7), dans la direction d'amenuisement (11).

14. Utilisation selon la revendication 14, dans laquelle l'élément de serrage (8) est amené à l'état de serrage à l'aide d'une force de frappe, de préférence appliquée avec un outil de frappe.
